# EUROPÄISCHE PATENTANMELDUNG

(11) **EP 4 837 421 A1**
(43) Veröffentlichungstag der Anmeldung: **11.11.2026**
(21) Anmeldenummer: 26176520.0
(22) Anmeldetag: 05.05.2026
(51) Int. Cl.: A21C 9/08, A21C 7/01, B65G 47/26, B65G 47/29, B65G 47/52

(54) **TAKTBAND**

(30) Priorität: 05.05.2025 AT 503012025
(71) Anmelder: KÖNIG MASCHINEN GESELLSCHAFT M.B.H., 8045 Graz (AT)
(72) Erfinder: Rieger, Thomas, 8501 Lieboch (AT); Sauer, Franz, 8430 Leibnitz (AT)
(74) Vertreter: Wildhack & Jellinek Patentanwälte GmbH

(57) **Zusammenfassung**

Vorrichtung (1) zum Ausrichten und Transport von Teigstücken (2), wobei die Vorrichtung (1) einen ersten Transportbandabschnitt (3) und einen zweiten Transportbandabschnitt (4) aufweist, welche zum Transport von Teigstücken (2) in einer Transportebene (E) entlang einer Transportrichtung (X) eingerichtet sind, wobei der erste Transportbandabschnitt (3) und der zweite Transportbandabschnitt (4) in Transportrichtung (X) hintereinander angeordnet sind und zwischen dem ersten Transportbandabschnitt (3) und dem zweiten Transportbandabschnitt (4) ein Übergabebereich (5) ausgebildet ist, an welchem Teigstücke (2) von dem ersten Transportbandabschnitt (3) auf den zweiten Transportbandabschnitt (4) weitertransportierbar sind, wobei ein dem Übergabebereich (5) zugewandter Endabschnitt (3a) des ersten Transportbandabschnitts (3) unter die Transportebene (E) derart absenkbar ausgebildet ist, dass im abgesenkten Zustand Teigstücke (2) an einem Weitertransport entlang der Transportrichtung (X), über den Übergabebereich (5) hinaus, gehindert sind.

## Beschreibung

Die Erfindung betrifft eine Vorrichtung gemäß Anspruch 1, zum Ausrichten und Transport von Teigstücken, wobei die Vorrichtung einen ersten Transportbandabschnitt und einen zweiten Transportbandabschnitt aufweist, welche zum Transport von Teigstücken in einer Transportebene entlang einer Transportrichtung eingerichtet sind, wobei der erste Transportbandabschnitt und der zweite Transportbandabschnitt in Transportrichtung hintereinander angeordnet sind und zwischen dem ersten Transportbandabschnitt und dem zweiten Transportbandabschnitt ein Übergabebereich ausgebildet ist, an welchem Teigstücke von dem ersten Transportbandabschnitt auf den zweiten Transportbandabschnitt weitertransportierbar sind.

Die Erfindung betrifft weiters ein Verfahren zum Ausrichten und Transport von Teigstücken.

### Technischer Hintergrund

Im Stand der Technik sind Vorrichtungen bekannt, welche langgerollte und/oder gewickelte Teigstücke bzw. Teiglinge nach dem Langrollen, z.B. in einer Reihe, ausrichten. Die Ausrichtung ist für nachgeordnete Prozesse essentiell, da nur eine regelmäßige Anordnung von Teigstücken auf einem Transportband eine Ausrichtung der Teigstücke quer zur Transportrichtung erlaubt. Eine bisher bekannte Möglichkeit zur Ausrichtung von Teigstücken ist eine Vorrichtung mit einer Absetzrolle, bei welcher die Teigstücke in einem Spalt zwischen zwei Transportbändern liegen (bzw. rotierend gehalten werden) und die Absetzrolle taktweise abgesetzt wird, um die im Spalt liegenden Teigstücke von einem Transportband auf das nächste überzuführen. Durch den Kontakt der Teigstücke mit der abgesetzten, rotierenden Absetzrolle werden die Teigstücke gleichzeitig aus dem Spalt und auf das nächste Transportband befördert, auf welchem die Teigstücke dann ausgerichtet bzw. in einer Linie nebeneinander liegend, weitertransportiert werden. Bei einer anderen bekannten Lösung kommen statt Absetzrollen verstellbare Zentrierklappen, gegen welche die Teigstücke zum Ausrichten anfahren, zum Einsatz.

Nachteiligerweise erfordern die bekannten Lösungen zum Transportieren und Ausrichten von Teigstücken zusätzliche Komponenten mit eigenen Antrieben, welche sich oftmals nur mit hohem Aufwand in bestehende Transportanlagen integrieren lassen. Weiters müssen die zusätzlichen Komponenten auch gewartet und gereinigt werden, was wiederum einen erhöhten Arbeitsaufwand nach sich zieht.

Es ist daher eine Aufgabe der Erfindung, die Nachteile des Standes der Technik zu beheben oder zumindest zu verbessern. Insbesondere ist es eine Aufgabe der Erfindung, eine konstruktiv einfache und zuverlässige Vorrichtung zum Ausrichten und Transport von Teigstücken zu schaffen.

Diese Aufgabe wird durch eine Vorrichtung mit den Merkmalen von Anspruch 1 und durch ein Verfahren mit den Merkmalen von Anspruch 14 gelöst. Bevorzugte Ausführungsformen sind in den abhängigen Ansprüchen beschrieben.

### Kurzdarstellung der Erfindung

Erfindungsgemäß ist ein dem Übergabebereich zugewandter Endabschnitt des ersten Transportbandabschnitts unter die Transportebene derart absenkbar oder ein dem Übergabebereich zugewandter Endabschnitt des zweiten Transportbandabschnitts über die Transportebene derart anhebbar ausgebildet ist, dass im abgesenkten oder angehobenen Zustand Teigstücke an einem Weitertransport entlang der Transportrichtung, über den Übergabebereich hinaus, gehindert sind..

Dadurch ergibt sich der Vorteil, dass keine zusätzlichen Komponenten erforderlich sind, um die Teigstücke auszurichten. Damit kann der Aufbau, die Wartung und die Reinigung der Vorrichtung erleichtert werden. Durch den abgesenkten Endabschnitt des ersten Transportbandabschnitts können die Teigstücke im Übergabebereich, insbesondere um deren eigene Längsachse rotierend, gehalten werden. Um die Teigstücke, nachdem diese in dem Übergabebereich durch die Absenkung "gesammelt" wurden, ausgerichtet weiterzutransportieren, kann der abgesenkte Endabschnitt wieder in die Transportebene angehoben werden. Ein weiterer Vorteil besteht darin, dass Teigstücke, welche vor dem absenkbaren Endabschnitt quer bzw. schräg zur Transportrichtung orientiert oder in sich verwunden oder gekrümmt sind, am abgesenkten Endabschnitt orthogonal zur Transportrichtung und in sich geradlinig ausgerichtet werden. Damit sind Teigstücke - in Transportrichtung nach dem Übergabebereich - zueinander gleichgerichtet, wodurch deren Weiterverarbeitung verbessert wird.

Es kann vorgesehen sein, dass die Vorrichtung eine Verstellvorrichtung aufweist, welche dazu eingerichtet ist, in einem Ausrichtungszustand der Vorrichtung den Endabschnitt des ersten Transportbandabschnitts unter die Transportebene abzusenken, um einen Weitertransport der Teigstücke entlang der Transportrichtung, über den Übergabebereich hinaus, zu verhindern, und in einem Weitertransportzustand den abgesenkten Endabschnitt wieder in die Transportebene anzuheben, um einen Weitertransport der Teigstücke, über den Übergabebereich hinaus, auf den zweiten Transportbandabschnitt, zu gewährleisten. Die Verstellvorrichtung kann beispielsweise einen Verschwenkmechanismus umfassen, welcher zur Verschwenkung des Endabschnitts des ersten Transportbandabschnitts unter die Transportebene eingerichtet ist.

Es kann vorgesehen sein, dass die Verstellvorrichtung dazu eingerichtet ist, einen Wechsel zwischen dem Ausrichtungszustand und dem Weitertransportzustand, und vice versa, nach einem bestimmten Zeitintervall oder in Antwort auf ein Steuersignal durchzuführen. Dadurch kann vorteilhafterweise eine automatisierte bzw. steuerbare Ausrichtung der Teigstücke erfolgen.

Es kann vorgesehen sein, dass ein dem Übergabebereich zugewandter Endabschnitt des zweiten Transportbandabschnitts derart geführt ist, dass, während der Absenkung des absenkbaren Endabschnitts des ersten Transportbandabschnitts, Teigstücke einen den Weitertransport hindernden Kontakt mit dem Endabschnitt des zweiten Transportbandabschnitts ausbilden. Die Führung des zweiten Transportbandabschnitts kann über entsprechend angeordnete Umlenkrollen erfolgen.

Es kann vorgesehen sein, dass der dem Übergabebereich zugewandte Endabschnitt des zweiten Transportbandabschnitts im Wesentlichen orthogonal, insbesondere in einer Einbaulage der Vorrichtung im Wesentlichen vertikal, zur Transportebene geführt ist. Dadurch können die Teigstücke zwischen dem vertikal geführten Endabschnitt des zweiten Transportbandabschnitts und dem abgesenkten Endabschnitt des ersten Transportbandabschnitts rotierend, in einer bestimmten Position - im Übergabebereich - entlang der Transportrichtung, gehalten werden.

Es kann vorgesehen sein, dass während der Absenkung Teigstücke den abgesenkten Endabschnitt des ersten Transportbandabschnitts und den dem Übergabebereich zugewandten Endabschnitt des zweiten Transportbandabschnitts zumindest abschnittsweise kontaktieren. Insbesondere rotieren die Teigstücke "am Stand" im Übergabebereich, wodurch vorteilhafterweise ein Ankleben der Teigstücke an einem der Transportbänder verhindert werden kann.

Es kann vorgesehen sein, dass die Vorrichtung eine rotierbar gelagerte Absenkwalze, insbesondere eine Taktrolle, aufweist, welche in einer Einbaulage der Vorrichtung vertikal oberhalb des Übergabebereichs angeordnet und in Richtung des Übergabebereichs absenkbar ausgebildet ist. Durch die Absenkwalze kann ein Übertreten der Teigstücke vom ersten Transportbandabschnitt auf den zweiten Transportbandabschnitt, nach deren Ausrichtung, erleichtert werden.

Es kann vorgesehen sein, dass die Absenkwalze derart ausgebildet ist, dass die Absenkwalze in deren abgesenkten Zustand Teigstücke, zu deren Weitertransport vom ersten Transportbandabschnitt auf den zweiten Transportbandabschnitt, kontaktiert.

Es kann vorgesehen sein, dass eine Rotationsrichtung der Absenkwalze gegenläufig zu einer Rotationsrichtung des ersten Transportbandabschnitts und/oder des zweiten Transportbandabschnitts ist.

Es kann vorgesehen sein, dass die Vorrichtung ein drittes Transportband aufweist, wobei der erste Transportbandabschnitt und das dritte Transportband zusammenwirkend, zum Langrollen von Teigstücken, ausgestaltet sind.

Es kann vorgesehen sein, dass das dritte Transportband in Einbaulage vertikal oberhalb des ersten Transportbandabschnitts, insbesondere oberhalb eines dem absenkbaren Endabschnitt abgewandten Abschnitt des ersten Transportbandabschnitts, angeordnet ist, wobei das dritte Transportband zum ersten Transportbandabschnitt eine gegenläufige Rotationsrichtung und/oder eine unterschiedliche Rotationsgeschwindigkeit aufweist.

Es kann vorgesehen sein, dass der erste Transportbandabschnitt und der zweite Transportbandabschnitt ein in sich geschlossenes Transportband ausbilden. Der absenkbare Endabschnitt des ersten Transportbandabschnitts und der dem Übergabebereich zugewandte Endabschnitt des zweiten Transportbandabschnitts können mittels entsprechend angeordneter Umlenkrollen realisiert werden.

Alternativ dazu kann es vorgesehen sein, dass der erste Transportbandabschnitt ein erstes Transportband und der zweite Transportbandabschnitt ein vom ersten Transportband getrenntes zweites Transportband ausbildet. Das erste Transportband und das zweite Transportband können mit entsprechend angeordneten Umlenkrollen geführt werden und jeweils ein in sich geschlossenes Transportband ausbilden.

Gemäß einem weiteren Aspekt der Erfindung ist ein Verfahren vorgesehen, zum Ausrichten und Transport von Teigstücken, welche in einer Transportebene entlang einer Transportrichtung von einem ersten Transportbandabschnitt und einem, in Transportrichtung dem ersten Transportbandabschnitt nachgeschalteten, zweiten Transportbandabschnitt transportiert werden, wobei die Teigstücke an einem Anfangsabschnitt des ersten Transportbandabschnitts unausgerichtet transportiert werden, wobei zwischen dem ersten Transportbandabschnitt und dem zweiten Transportbandabschnitt ein Übergabebereich ausgebildet ist, an welchem die unausgerichteten Teigstücke ausgerichtet und auf den zweiten Transportbandabschnitt weitertransportiert werden, wobei zur Ausrichtung der Teigstücke ein dem Übergabebereich zugewandter Endabschnitt des ersten Transportbandabschnitts unter die Transportebene abgesenkt wird und ein dem Übergabebereich zugewandter Endabschnitt des zweiten Transportbandabschnitts derart geführt ist, dass Teigstücke, während der Absenkung des Endabschnitts des ersten Transportbandabschnitts, den Endabschnitt des zweiten Transportbandabschnitts kontaktieren, wodurch deren Weitertransport über den Übergabebereich hinaus gehindert ist.

Es kann vorgesehen sein, dass nach einem vorgebbaren Zeitintervall, oder in Antwort auf ein Steuersignal, der abgesenkte Endabschnitt des ersten Transportbandabschnitts wieder in die Transportebene angehoben wird, um einen Weitertransport von ausgerichteten Teigstücken auf den zweiten Transportbandabschnitt zu gewährleisten.

Es kann vorgesehen sein, dass die Teigstücke an dem Übergabebereich derart ausgerichtet werden, dass Längsachsen der Teigstücke entlang einer Ausrichtungslinie angeordnet, insbesondere aufgereiht, sind, wobei die Ausrichtungslinie orthogonal zur Transportrichtung orientiert ist.

Alternative Ausführungsformen der erfindungsgemäßen Vorrichtung und des erfindungsgemäßen Verfahrens sehen vor, das anstelle des Absenkens des ersten Transportbandabschnitts im Übergabebereich der zweite Transportbandabschnitt im Übergabebereich angehoben wird. Analog können auch die weiteren Ausführungsformen des Absenkens auch mit einer Anhebung des zweiten Transportbandabschnitts im Übergabebereich ausgeführt werden.

### Kurzbeschreibung der Figuren

Die Erfindung wird nachstehend anhand eines vorteilhaften Ausführungsbeispiels, auf welches die Erfindung jedoch nicht beschränkt ist, näher erläutert.

In den Abbildungen zeigt:
- Fig. 1: eine schematische Seitenansicht einer erfindungsgemäßen Vorrichtung,
- Fig. 2: eine weitere Ansicht der Vorrichtung gemäß Fig. 1,
- Fig. 3: eine Draufsicht auf die Vorrichtung gemäß Fig. 1,
- Fig. 4: ein zweites Ausführungsbeispiel einer erfindungsgemäßen Vorrichtung.

### Figurenbeschreibung

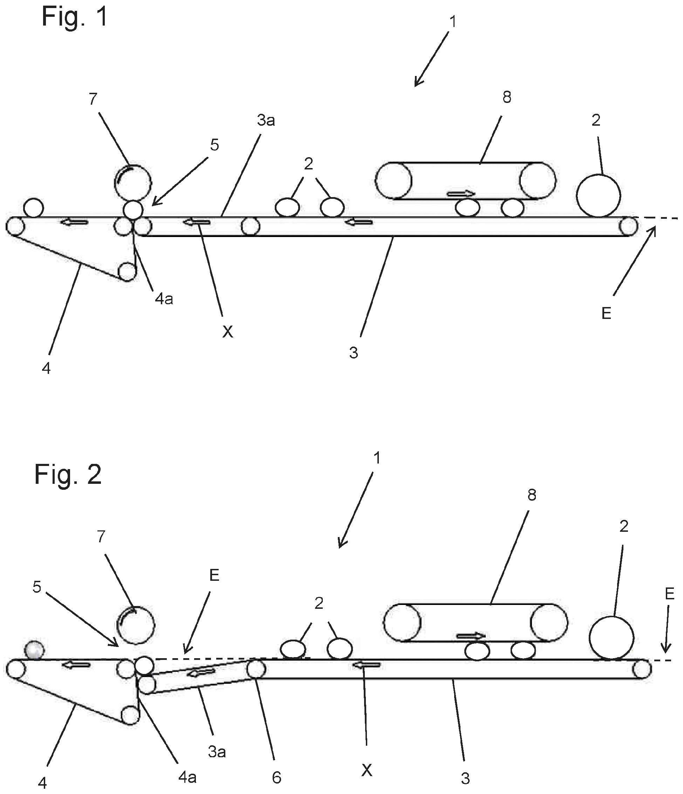

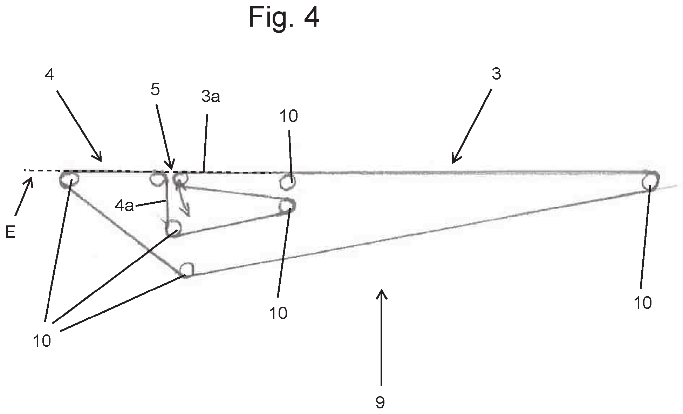

**Fig. 1** zeigt eine erfindungsgemäße Vorrichtung 1 zum Ausrichten und Transport von Teigstücken 2. Die Vorrichtung 1 umfasst einen ersten Transportbandabschnitt 3 und einen zweiten Transportbandabschnitt 4. Die beiden Transportbandabschnitte der Vorrichtung 1 sind im Ausführungsbeispiel gemäß den Fig. 1 bis 3 als zwei getrennte Transportbänder 3, 4 ausgebildet, weshalb in der weiteren Beschreibung dieses Ausführungsbeispiels der Begriff "Transportband" verwendet wird. Ein zweites Ausführungsbeispiel, bei welchem die Vorrichtung 1 ein einziges Transportband mit zwei Transportbandabschnitten aufweist, wird weiter unten anhand von Fig. 4 beschrieben.

Die beiden Transportbänder 3, 4 sind zum Transport von Teigstücken 2 in einer Transportebene E entlang einer Transportrichtung X eingerichtet. Das erste Transportband 3 und das zweite Transportband 4 sind in Transportrichtung X hintereinander angeordnet. Weiters ist zwischen dem ersten Transportband 3 und dem zweiten Transportband 4 ein Übergabebereich 5 ausgebildet. An dem Übergabebereich 5 werden Teigstücke 2 von dem ersten Transportband 3 auf das zweite Transportband 4 weitertransportiert bzw. zu deren Ausrichtung gehalten. Der Übergabebereich 5 kann daher auch als Ausrichtungsbereich bezeichnet werden.

Wie in **Fig. 2** gezeigt, ist, um die Teigstücke im Übergabebereich 5 auszurichten, ein dem Übergabebereich 5 zugewandter Endabschnitt 3a des ersten Transportbands 3 unter die Transportebene E absenkbar ausgebildet. Die Absenkung ist derart, dass im abgesenkten Zustand Teigstücke 2 an einem Weitertransport entlang der Transportrichtung X, über den Übergabebereich 5 hinaus, gehindert sind. Weiters ist ein dem Übergabebereich 5 zugewandter Endabschnitt 4a des zweiten Transportbands 4 mittels Umlenkrollen derart geführt, dass, während der Absenkung des absenkbaren Endabschnitts 3a des ersten Transportbands 3, Teigstücke 2 einen den Weitertransport hindernden Kontakt mit dem Endabschnitt 4a des zweiten Transportbands 4 ausbilden. In dem gezeigten Ausführungsbeispiel ist der dem Übergabebereich 5 zugewandte Endabschnitt 4a des zweiten Transportbands 4 im Wesentlichen orthogonal, in einer Einbaulage der Vorrichtung 1 im Wesentlichen vertikal, zur Transportebene E geführt. Während der Absenkung kontaktieren Teigstücke 2 den abgesenkten Endabschnitt 3a des ersten Transportbands 3 und den dem Übergabebereich 5 zugewandten Endabschnitt 4a des zweiten Transportbands 4 zumindest abschnittsweise. Damit können die Teigstücke durch die Absenkung im Übergabebereich 5 rotierend gehalten werden.

Die Vorrichtung 1 kann zur Absenkung des Endabschnitts 3a eine Verstellvorrichtung 6 aufweisen. Diese ist dazu eingerichtet, in einem sogenannten Ausrichtungszustand der Vorrichtung 1 den Endabschnitt 3a des ersten Transportbands 3 unter die Transportebene E abzusenken, um einen Weitertransport der Teigstücke 2 entlang der Transportrichtung X, über den Übergabebereich 5 hinaus, zu verhindern. Weiters kann die Verstellvorrichtung 6 die Vorrichtung 1 vom Ausrichtungszustand (vgl. Fig. 2) in einen Weitertransportzustand (vgl. Fig. 1) überführen, in welchem der abgesenkte Endabschnitt 3a wieder in die Transportebene E angehoben ist, um einen Weitertransport der Teigstücke 2, über den Übergabebereich 5 hinaus, auf das zweite Transportband 4, zu gewährleisten. Im Weitertransportzustand können sich die einander zugewandten Endabschnitte 3a, 4a des ersten Transportbands 3 und des zweiten Transportbands 4 kontaktieren. Es kann zwischen den beiden Endabschnitten 3a, 4a auch ein bestimmter Abstand entlang der Transportrichtung X ausgebildet sein. Dieser Abstand kann derart gewählt sein, dass ein Weitertransport der Teigstücke vom ersten Transportband 3 auf das zweite Transportband 4 gewährleistet ist, die Teigstücke 2 nicht zwischen den Transportbändern 3, 4 durchfallen, und es zu keiner störenden Reibung zwischen den beiden Transportbändern 3, 4 kommt. Die Verstellvorrichtung 6 kann in einer vorteilhaften Ausführung der Erfindung dazu eingerichtet sein, einen Wechsel zwischen dem Ausrichtungszustand und dem Weitertransportzustand, und vice versa, nach einem bestimmten Zeitintervall oder in Antwort auf ein Steuersignal durchzuführen.

Die Vorrichtung 1 kann optional eine rotierbar gelagerte Absenkwalze 7, insbesondere ein Taktband, aufweisen. Diese ist in einer Einbaulage der Vorrichtung 1 vertikal oberhalb des Übergabebereichs 5 angeordnet und in Richtung des Übergabebereichs 6 absenkbar ausgebildet ist. Die Absenkwalze 7 ist derart ausgebildet, dass die Absenkwalze 7 in deren abgesenkten Zustand Teigstücke 2, zu deren Weitertransport vom ersten Transportband 3 auf das zweite Transportband 4, kontaktiert. Dazu ist eine Rotationsrichtung der Absenkwalze 7 gegenläufig zu einer Rotationsrichtung des ersten Transportbands 3 und des zweiten Transportbands 4.

Die Vorrichtung 1 kann optional ein drittes Transportband 8 aufweisen. Dieses kann mit dem ersten Transportband 3 zusammenwirken, wodurch die Teigstücke langgerollt werden. Das dritte Transportband 8 kann in Einbaulage bevorzugt vertikal oberhalb des ersten Transportbands 3, insbesondere oberhalb eines dem absenkbaren Endabschnitt 3a abgewandten Abschnitt des ersten Transportbands 3, angeordnet sein. Um die Teigstücke zwischen dem ersten Transportband 3 und dem dritten Transportband 8 langzurollen, hat das dritte Transportband 8 eine zum ersten Transportband 3 unterschiedliche Rotationsgeschwindigkeit.

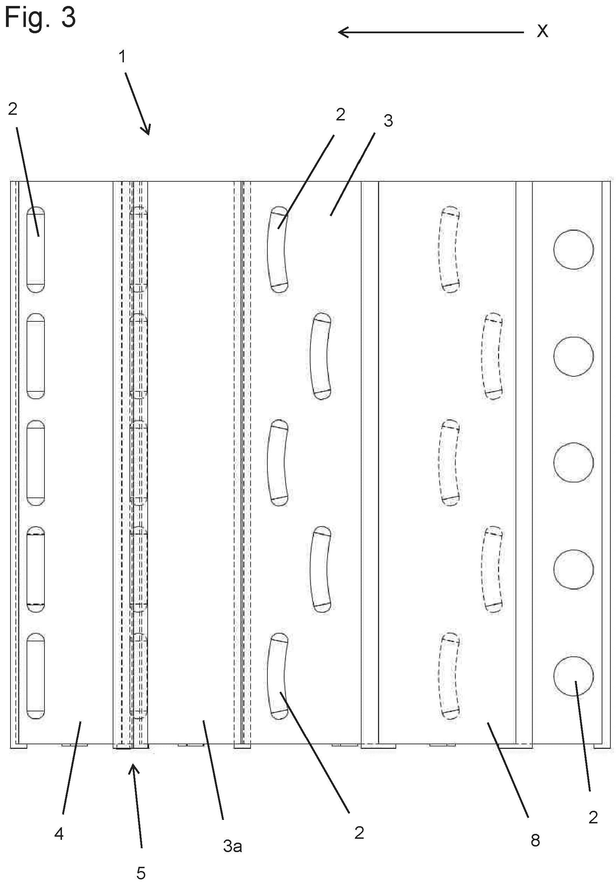

**Fig. 3** zeigt eine Draufsicht auf eine erfindungsgemäße Vorrichtung 1, wobei durch die Draufsicht die Ausrichtung der Teigstücke 2 besser erkennbar ist. Am rechten Rand der Abbildung liegen fünf kreisförmige Teigstücke an einem Anfangsabschnitt des ersten Transportbands 3. Diese werden von dem ersten Transportband 3 entlang der Transportrichtung X - in der Blattebene nach links - zwischen das dritte Transportband 8 und das erste Transportband 3 befördert. In diesem Zwischenraum werden die Teigstücke 2, wie oben beschrieben langgerollt. Durch das Langrollen liegen die Teigstücke jedoch nach dem dritten Transportband 8 unausgerichtet auf dem ersten Transportband 3. Wie im Mittelbereich der Fig. 3 erkennbar, sind die langgerollten Teigstücke 2 unterschiedlich weit entlang der Transportrichtung X fortgeschritten. In Fig. 3 sind drei Teigstücke - in Transportrichtung - weiter vorne als zwei andere Teigstücke. Im Übergabebereich 5, in welchem der Endabschnitt 3a des ersten Transportbands 3 in Fig. 3 abgesenkt ist, sammeln sich die Teigstücke 2 und werden dadurch entlang einer gedachten Linie, welche orthogonal zur Transportrichtung X orientiert ist, ausgerichtet. Nach einem Anheben des Endabschnitts 3a zurück in die Transportebene E werden die nun ausgerichteten Teigstücke 2 (in Fig. 3 links) auf dem zweiten Transportband 4 zur weiteren Verarbeitung befördert.

**Fig. 4** zeigt eine Ansicht eines alternativen Transportbands 9 einer Vorrichtung 1 gemäß eines zweiten Ausführungsbeispiels. Zur besseren Übersicht ist in Fig. 4 lediglich das Transportband 9 und dessen Umlenkrollen 10 gezeigt. Ein derartiges Transportband 9 kann auch bei einer Vorrichtung 1 gemäß Fig. 1 bis Fig. 3 eingesetzt werden. In diesem Ausführungsbeispiel sind der erste Transportbandabschnitt 3 und der zweite Transportbandabschnitt 4 als ein zusammenhängendes bzw. geschlossenes Transportband 9 ausgebildet. Die Führung des Transportbands 9 erfolgt mit acht entsprechend angeordneten Umlenkrollen 10. In diesem Ausführungsbeispiel liegt der Übergabebereich 5 zwischen dem absenkbaren Endabschnitt 3a des ersten Transportbandabschnitts 3 und dem vertikal geführten Endabschnitt 4a des zweiten Transportbandabschnitts 4. Die Absenkbewegung - bzw. in diesem Beispiel die Verschwenkung - des Endabschnitts 3a aus der bzw. zurück in die Transportebene E ist mit einem Doppelpfeil angedeutet. Die Funktionsweise erfolgt analog zur Vorrichtung 1 gemäß den Fig. 1 bis 3.

Alternativ zu den in den Fig 1 bis 3 dargestellten Ausführungsformen, ist es auch möglich den Endabschnitt 4a des zweiten Transportbandabschnitts 4 analog wie zuvor zum Absenken des Endabschnitt 3a des ersten Transportbandabschnitts 3 über die Transportebene E anzuheben und derart den Weitertransport der Teigstücke zu verhindern und diese Auszurichten.

## Patentansprüche

1. Vorrichtung (1) zum Ausrichten und Transport von Teigstücken (2), wobei die Vorrichtung (1) einen ersten Transportbandabschnitt (3) und einen zweiten Transportbandabschnitt (4) aufweist, welche zum Transport von Teigstücken (2) in einer Transportebene (E) entlang einer Transportrichtung (X) eingerichtet sind, wobei der erste Transportbandabschnitt (3) und der zweite Transportbandabschnitt (4) in Transportrichtung (X) hintereinander angeordnet sind und zwischen dem ersten Transportbandabschnitt (3) und dem zweiten Transportbandabschnitt (4) ein Übergabebereich (5) ausgebildet ist, an welchem Teigstücke (2) von dem ersten Transportbandabschnitt (3) auf den zweiten Transportbandabschnitt (4) weitertransportierbar sind,
**dadurch gekennzeichnet, dass**
ein dem Übergabebereich (5) zugewandter Endabschnitt (3a) des ersten Transportbandabschnitts (3) unter die Transportebene (E) derart absenkbar oder ein dem Übergabebereich (5) zugewandter Endabschnitt (4a) des zweiten Transportbandabschnitts (4) über die Transportebene (E) derart anhebbar ausgebildet ist, dass im abgesenkten oder angehobenen Zustand Teigstücke (2) an einem Weitertransport entlang der Transportrichtung (X), über den Übergabebereich (5) hinaus, gehindert sind.

2. Vorrichtung nach Anspruch 1, wobei die Vorrichtung (1) eine Verstellvorrichtung (6) aufweist, welche dazu eingerichtet ist, in einem Ausrichtungszustand der Vorrichtung (1) den Endabschnitt (3a) des ersten Transportbandabschnitts (3) unter die Transportebene (E) abzusenken oder den Endabschnitt (4a) des zweiten Transportbandabschnitts (4) über die Transportebene (E) derart anzuheben, um einen Weitertransport der Teigstücke (2) entlang der Transportrichtung (X), über den Übergabebereich (5) hinaus, zu verhindern, und in einem Weitertransportzustand den abgesenkten Endabschnitt (3a) wieder in die Transportebene (E) anzuheben oder den angehobenen Endabschnitt (4a), um einen Weitertransport der Teigstücke (2), über den Übergabebereich (5) hinaus, auf den zweiten Transportbandabschnitt (4), zu gewährleisten.

3. Vorrichtung nach Anspruch 2, wobei die Verstellvorrichtung (6) dazu eingerichtet ist, einen Wechsel zwischen dem Ausrichtungszustand und dem Weitertransportzustand, und vice versa, nach einem bestimmten Zeitintervall oder in Antwort auf ein Steuersignal durchzuführen.

4. Vorrichtung nach einem der vorhergehenden Ansprüche, wobei ein dem Übergabebereich (5) zugewandter Endabschnitt (4a) des zweiten Transportbandabschnitts (4) derart geführt ist, dass, während der Absenkung des absenkbaren Endabschnitts (3a) des ersten Transportbandabschnitts (3), Teigstücke (2) einen den Weitertransport hindernden Kontakt mit dem Endabschnitt (4a) des zweiten Transportbandabschnitts (4) ausbilden.

5. Vorrichtung nach Anspruch 4, wobei der dem Übergabebereich (5) zugewandte Endabschnitt (4a) des zweiten Transportbandabschnitts (4) im Wesentlichen orthogonal, insbesondere in einer Einbaulage der Vorrichtung (1) im Wesentlichen vertikal, zur Transportebene (E) geführt ist.

6. Vorrichtung nach Anspruch 4 oder 5, wobei während der Absenkung Teigstücke (2) den abgesenkten Endabschnitt (3a) des ersten Transportbandabschnitts (3) und den dem Übergabebereich (5) zugewandten Endabschnitt (4a) des zweiten Transportbandabschnitts (4) zumindest abschnittsweise kontaktieren.

7. Vorrichtung nach einem der vorhergehenden Ansprüche, wobei die Vorrichtung (1) eine rotierbar gelagerte Absenkwalze (7), insbesondere eine Taktrolle, aufweist, welche in einer Einbaulage der Vorrichtung (1) vertikal oberhalb des Übergabebereichs (5) angeordnet und in Richtung des Übergabebereichs (6) absenkbar ausgebildet ist.

8. Vorrichtung nach Anspruch 7, wobei die Absenkwalze (7) derart ausgebildet ist, dass die Absenkwalze (7) in deren abgesenkten Zustand Teigstücke (2), zu deren Weitertransport vom ersten Transportbandabschnitt (3) auf den zweiten Transportbandabschnitt (4), kontaktiert.

9. Vorrichtung nach Anspruch 7 oder 8, wobei eine Rotationsrichtung der Absenkwalze (7) gegenläufig zu einer Rotationsrichtung des ersten Transportbandabschnitts (3) und/oder des zweiten Transportbandabschnitts (4) ist.

10. Vorrichtung nach einem der vorhergehenden Ansprüche, wobei die Vorrichtung (1) ein drittes Transportband (8) aufweist, wobei der erste Transportbandabschnitt (3) und das dritte Transportband (8) zusammenwirkend, zum Langrollen von Teigstücken (2), ausgestaltet sind.

11. Vorrichtung nach Anspruch 11, wobei das dritte Transportband (8) in Einbaulage vertikal oberhalb des ersten Transportbandabschnitts (3), insbesondere oberhalb eines dem absenkbaren Endabschnitt (3a) abgewandten Abschnitt des ersten Transportbandabschnitts (3), angeordnet ist, wobei das dritte Transportband (8) zum ersten Transportbandabschnitt (3) eine gegenläufige Rotationsrichtung und/oder eine unterschiedliche Rotationsgeschwindigkeit aufweist.

12. Vorrichtung nach einem der vorhergehenden Ansprüche, wobei der erste Transportbandabschnitt (3) und der zweite Transportbandabschnitt (4) ein in sich geschlossenes Transportband (9) ausbilden.

13. Vorrichtung nach einem der vorhergehenden Ansprüche, wobei der erste Transportbandabschnitt (3) ein erstes Transportband und der zweite Transportbandabschnitt (4) ein vom ersten Transportband getrenntes zweites Transportband ausbildet.

14. Verfahren zum Ausrichten und Transport von Teigstücken (2), welche in einer Transportebene (E) entlang einer Transportrichtung (X) von einer Vorrichtung (1) mit einem ersten Transportbandabschnitt (3) und einem, in Transportrichtung (X) dem ersten Transportbandabschnitt (3) nachgeschalteten, zweiten Transportbandabschnitt (4) transportiert werden, wobei die Teigstücke (2) an einem Anfangsabschnitt des ersten Transportbandabschnitts (3) unausgerichtet transportiert werden, wobei zwischen dem ersten Transportbandabschnitt (3) und dem zweiten Transportbandabschnitt (4) ein Übergabebereich (5) ausgebildet ist, an welchem die unausgerichteten Teigstücke (2) ausgerichtet und auf den zweiten Transportbandabschnitt (4) weitertransportiert werden,
**dadurch gekennzeichnet, dass**
zur Ausrichtung der Teigstücke (2) ein dem Übergabebereich (5) zugewandter Endabschnitt (3a) des ersten Transportbandabschnitts (3) unter die Transportebene (E) abgesenkt wird und ein dem Übergabebereich (5) zugewandter Endabschnitt (4a) des zweiten Transportbandabschnitts (4) derart geführt ist, dass Teigstücke (2), während der Absenkung des Endabschnitts (3a) des ersten Transportbandabschnitts (3) oder der Anhebung des Endabschnitts (4a) des zweiten Transportbandabschnitts (4), den Endabschnitt (4a) des zweiten Transportbandabschnitts (4) kontaktieren, wodurch deren Weitertransport über den Übergabebereich (5) hinaus gehindert ist.

15. Verfahren nach Anspruch 14, wobei nach einem vorgebbaren Zeitintervall, oder in Antwort auf ein Steuersignal, der abgesenkte Endabschnitt (3a) des ersten Transportbandabschnitts (3) wieder in die Transportebene (E) angehoben oder der Endabschnitt (4a) des zweiten Transportbandabschnitts (4) abgesenkt wird, um einen Weitertransport von ausgerichteten Teigstücken (2) auf den zweiten Transportbandabschnitt (4) zu gewährleisten.

16. Verfahren nach Anspruch 14 oder 15, wobei die Teigstücke (2) an dem Übergabebereich (5) derart ausgerichtet werden, dass Längsachsen der Teigstücke entlang einer Ausrichtungslinie angeordnet, insbesondere aufgereiht, sind, wobei die Ausrichtungslinie orthogonal zur Transportrichtung (X) orientiert ist.
